# EUROPEAN PATENT SPECIFICATION

(11) **EP 0 346 596 B1**
(45) Date of publication and mention of the grant of the patent: **12.01.1994**
(21) Application number: 89107185.4
(22) Date of filing: 21.04.1989
(51) Int. Cl.: G02B 6/42

(54) **Optical module with connected optical fiber**
Optisches Modul mit angeschlossener Glasfaser
Module optique avec fibre optique connectée

(30) Priority: 22.04.1988 JP 100927/88; 22.04.1988 JP 100928/88
(43) Date of publication of application: 20.12.1989
(73) Proprietor: SUMITOMO ELECTRIC INDUSTRIES, LTD., Osaka-shi, Osaka 541 (JP)
(72) Inventor: Shiga, Nobuo c/o Yokohama Works, Yokohama-shi Kanagawa (JP); Sekiguchi, Takeshi c/o Yokohama Works, Yokohama-shi Kanagawa (JP); Aga, Keigo c/o Yokohama Works, Yokohama-shi Kanagawa (JP)
(74) Representative: Kahler, Kurt, Dipl.-Ing.

(56) References cited:
- EP-A- 0 264 335
- FR-A- 2 582 413
- GB-A- 2 065 918
- PATENT ABSTRACTS OF JAPAN, vol. 12, no. 69 (E-587), 3 March 1988 ; & JP-A-62211965
- PATENT ABSTRACTS OF JAPAN, vol. 11, no. 334 (P-631), 31 October 1987 ; & JP-A-62115405

## Description

The invention relates to an optical module arrangement and a method of fixing an optical fiber to a fiber support as specified in the preambles of claims 1 and 6, respectively.

Optical modules are used for example in optical communication systems, such as data links, optical local area networks (LANs) etc., wherein an optical fiber is to be connected to an optically operative device.

As such optical module there has been known an optical module comprising an optically operative device, such as a semiconductor laser, a pin-photodiode and the like, and an optical fiber optically coupled to the optically operative device in a metal package.

In such an optical module, the end of an optical fiber inserted in the package is soldered to a fiber support in the package, and the fiber support is molded in one piece with the package. A problem with such structure is that when a change is made to the shape or location of the fiber support, a new mold including that of the package has to be prepared, and consequently such structure is unadjustable to changes.

Another problem is that since the fiber support and the package are made of metal in one piece, the package adversely acts as a heat sink when the end of the optical fiber is soldered to the fiber support.

Accordingly it takes much energy and time to melt solder on the fiber support. Consequently the workability is poor. Further another problem is that when the soldering is performed, a soldering flux is evaporated and sticks to the light emitting portion or receiving portion, smearing the same, and part of the solder which has not been melted due to insufficient heating contacts the end of the optical fiber dislocating it from its correct position. Furthermore, the end of the optical fiber is fixed to an incorrect position.

Furthermore, EP-A-0 264 335 discloses an opto-electronic unit coupling a laser with an optical fiber and a method of aligning a laser with any optical fiber. Said unit is formed inside a metal package fitted with a tube for the optical fiber and several connections pins at the bottom thereof. To align the fiber with the laser a solder preform is melted, whereupon a drop of molten solder is deposited on the fiber supported by a metal block and the fiber's position is adjusted in three directions.

FR-A-2 582 413 discloses an optical module arrangement and a method of fixing an optical fiber to a fiber support as specified in the preambles of claims 1 and 6, respectively, in which a solder preform is positioned over an optical fiber and melted with a view to hold the fiber in place. As the solder preform melting over the fiber can freely spread on a solder plate during a heating step performed by an electrical heating means a dislocation between the end face of the optical fiber and a laser optically coupled thereto can occur.

Therefore, main object of the present invention is to provide an optical module arrangement having a large scope for changes in shapes and locations of a fiber support and which enables an optical fiber to be soldered to a fiber support in a short period of time.

Furthermore, the optical fiber should be secured precisely with respect to an optically operative device and contamination by soldering flux should be prevented.

The invention is defined in claims 1 and 6, respectively. Particular embodiments of the invention are set out in the dependent claims 2 to 5.

The invention is described in detail below with reference to the drawings, in which:
Fig. 1 is a perspective view of a major part of the optical module according to one embodiment of this invention;
Fig. 2 is a partial perspective view of the embodiment of Fig. 1 for explaining fixation of an optical fiber;
Fig. 3 is a front view of the embodiment of Fig. 1;
Figs. 4 and 5 are front views of modifications of the pre-formed structure other than those respectively shown in Figs. 2 and 3.

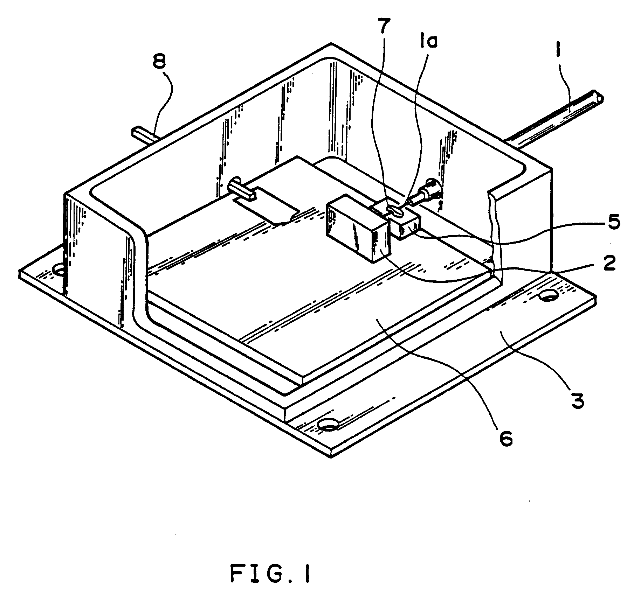

In an optical receiving module according to one embodiment of present invention, as shown in Fig. 1, in a metal package 3 there is provided a hybrid integrated circuit (IC) substrate 6 having a required circuit not shown. Openings are formed in side walls of the package 3. Through the openings an electric signal line 8 and an optical fiber 1 are inserted in the package 3.

The optical fiber 1 is optically connected to a pin-photodiode not shown provided on a side of a carrier chip 2, and a light emitted from the end of the optical fiber 1 is incident on the light receiving portion of the pin-photodiode as a light receiving device.

The optical fiber 1 has the end 1a made of so called metallised fiber which comprises exposed glass fiber and a plating applied thereto. The end 1a of the optical fiber 1 is first positioned precisely on a fiber support 5 disposed near the carrier chip 2 and then soldered to the fiber support 5.

The hybrid IC substrate 6 is made of a heat insulative material, e.g., ceramics or others. The carrier chip 2 is mounted on the hybrid IC chip 6 as one element of the circuit. The fiber support 5 is made of metal or ceramics vacuum evaporated with metal and is beforehand plated with a solder. The fiber support 5 is die bonded to the hybrid IC substrate 6 with a solder having a relatively high melting point, e.g., gold and tin (Au-Sn) solder with a melting point of 280°C.

After a cream solder is applied around the fiber support 5, the fiber support 5 is mounted on the hybrid IC substrate 6 and then heated. It is possible that the plating and die bonding of the fiber support 5 are performed simultaneously.

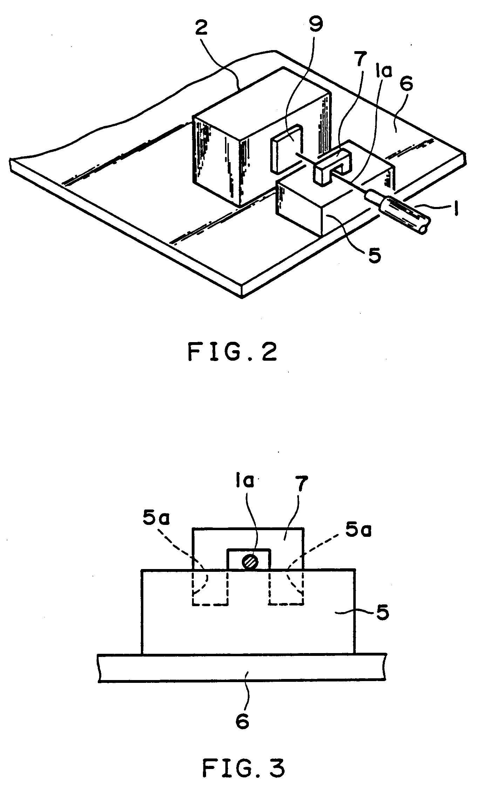

Next, the fixation of the end 1a of the optical fiber 1 to the fiber support 5 will be explained with reference to Figs. 2 and 3.

The end 1a of the optical fiber 1 is positioned so as to be optically coupled connected to the pin-photodiode 9 on the front side wall of the carrier chip 2. Concavities 5a are formed on the top of the fiber support 5. In the concavities 5a are inserted the legs of a pre-formed structure 7 bridged over the end 1a of the optical fiber 1 positioned on the top of the fiber support 5. The pre-formed structure 7 is made of a solder containing no flux and is shaped to have the form of a square bracket. It is preferable that the solder of the pre-formed structure 7 has lower melting point than that used to die bond the fiber support 5. The end 1a of the optical fiber 1 is plated beforehand to form a metallized fiber convenient for soldering.

The pre-formed structure 7 and the fiber support 5 as arranged in the above described manner are heated. When the heating temperature exceeds above the melting point of the pre-formed structure 7, the pre-formed structure 7 melts. Then the heating is stopped. The melted pre-formed structure 7 cools and solidifies, and the end 1a of the optical fiber 1 is fixed to the fiber support 5.

The end 1a of the optical fiber 1 may be positioned on the top of the fiber support 5 after the legs of the pre-formed structure 7 have been inserted and fixed in the concavities 5a and then the end 1a of the optical fiber 1 is put into the gap between the pre-formed structure 7 and the fiber support 5.

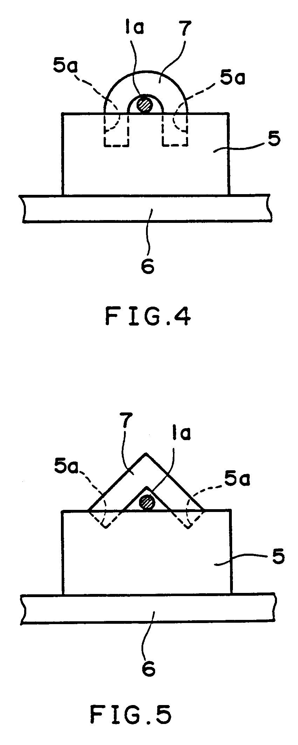

In this embodiment, the pre-formed structure 7 has a square bracket shape before melted but may have a U-shape or an L-shape as shown in Figs. 4 and 5.

Finally, a top cover not shown is attached to the package to seal the optical module.

In this embodiment, two legs of the pre-formed structure 7 are inserted in the concavities 5a respectively. But the pre-formed structure may have a J-shape in which the two legs have different lengths, and only one of the two legs is inserted in the concavity 5a. In this case there is only one concavity 5a.

This embodiment forms an optical module comprising a pin-photodiode acting as a light receiving device, and an optical fiber optically coupled to the light receiving device. But the optical module according to this invention could be a transmitting optical module wherein the light receiving device has been replaced by a light emitting diode or a laser diode acting as a light emitting device.

## Claims

1. An optical module arrangement for producing a finished optical module, said arrangement comprising:
- an electro-optical device (9) to be optically coupled to an optical fiber (1),
- an optical fiber support (5) having a support surface on which the fiber (1) is to be fixed in position, said support being provided near the electro-optical device (9) and
- an elongated solder preform (7) of predetermined shape positioned over the fiber (1),
**characterized** in
- that the optical fiber support (5) is provided with at least one cavity (5a) at a predetermined position on the fiber support surface to receive a respective end of the solder preform (7) and thereby support the preform over the fiber and form a bridge-like member passing over the fiber (1), which can be subsequently melted to encompass the fiber (1) for fixing.

2. An optical module arrangement according to claim 1, **characterized** in
that the solder preform (7) has a J-shape with one of the two legs being inserted into the cavity (5a).

3. An optical module arrangement according to claim 1, **characterized** in
- that the solder preform (7) has a square bracket shape, an U-shape or an L-shape and
- that a plurality of cavities (5a, 5a) are provided in the fiber support surface with the legs of the respective solder preforms being inserted therein.

4. An optical module arrangement according to any of the preceding claims,
**characterized** in
that the solder preform (7) contains no flux.

5. An optical module arrangement according to any of the preceding claims,
**characterized** in
that the electro-optical device (9) is mounted on a heat insulative substrate (6) together with the fiber support (5).

6. A method of fixing an optical fiber to a support surface on a fiber support provided near an electro-optical device, including the steps of:
(a) positioning the optical fiber (1) on the support surface of the fiber support (5),
(b) positioning a predetermined elongated solder preform (7) of predetermined shape over the optical fiber (1) and
(c) melting and solidifying the solder preform (7) to encompass the fiber,
**characterized** by the following steps:
(d) plating the support surface of the fiber support (5) with solder before carrying out step (a), and
(e) positioning at least one end of the solder preform (7) in a respective cavity (5a) in a predetermined position on the fiber support surface during carrying out step (b), thereby to maintain and support the preform (7) over the fiber (1) and form a bridge-like member passing over the fiber (1).

## Patentansprüche

1. Eine Anordnung eines optischen Moduls zum Erzeugen eines fertiggestellten optischen Moduls, wobei die Anordnung aufweist:
- eine elektro-optische Einrichtung (9), die mit einer Optikfaser (1) optisch zu koppeln ist,
- eine Optikfaserstütze (5) mit einer Abstützfläche, auf der die Faser (1) in richtiger Lage zu befestigen ist, wobei die Stütze nahe der elektro-optischen Einrichtung (9) vorgesehen ist, und
- eine längliche Lötmittelvorform (7) mit vorbestimmter Gestalt, die über der Faser (1) angeordnet ist,
dadurch **gekennzeichnet**,
- daR die Optikfaserstütze (5) an einer vorbestimmten Stelle auf der Faserabstützfläche mit mindestens einer Vertiefung (5a) versehen ist, die ein entsprechendes Ende der Lötmittelvorform (7) aufnimmt und dadurch die Vorform über der Faser abstützt und ein brückenförmiges, über die Faser (1) hinüberführendes Element ausbildet, das nachfolgend geschmolzen werden kann, um die Faser (1) zum Befestigen zu umfassen.

2. Eine Anordnung eines optischen Moduls nach Anspruch 1,
dadurch **gekennzeichnet**,
- daR die Lötmittelvorform (7) eine J-förmige Gestalt aufweist, wobei eines der beiden Beine in die Vertiefung (5a) eingesetzt ist.

3. Eine Anordnung eines optischen Moduls nach Anspruch 1,
dadurch **gekennzeichnet**,
- daß die Lötmittelvorform (7) die Gestalt einer eckigen Klammer, eine U-förmige Gestalt oder eine L-förmige Gestalt aufweist und
- daß eine Vielzahl von Vertiefungen (5a, 5a) in der Faserabstützfläche vorgesehen ist, wobei die Beine der jeweiligen Lötmittelvorform darin eingesetzt sind.

4. Eine Anordnung eines optischen Moduls nach einem der vorhergehenden Ansprüche,
dadurch **gekennzeichnet**,
- daß die Lötmittelvorform (7) kein Flußmittel enthält.

5. Eine Anordnung eines optischen Moduls nach einem der vorhergehenden Ansprüche,
dadurch **gekennzeichnet**,
- daß die elektro-optische Einrichtung (9) zusammen mit der Faserstütze (5) auf einem wärmeisolierenden Substrat (6) befestigt ist.

6. Ein Verfahren zum Befestigen einer Optikfaser auf einer Abstützfläche einer Faserstütze, die in der Nähe einer elektro-optischen Einrichtung vorgesehen ist, einschließend die Schritte:
(a) Positionieren der Optikfaser (1) auf der Abstützfläche der Faserstütze (5),
(b) Positionieren einer vorbestimmten länglichen Lötmittelvorform (7) von vorbestimmter Gestalt über der Optikfaser (1) und
(c) Aufschmelzen und Verfestigen der Lötmittelvorform (7) zum Umhüllen der Faser,
**gekennzeichnet** durch die folgenden Schritte:
(d) Beschichten der Abstützfläche der Faserstütze (5) mit einem Lötmittel vor dem Ausführen des Schrittes (a) und
(e) Anordnen von zumindest einem Ende der Lötmittelvorform (7) in einer entsprechenden Vertiefung (5a) an einer vorbestimmten Stelle auf der Faserabstützfläche während des Ausführens des Schrittes (b), um dadurch die Vorform (7) über der Faser (1) zu halten und zu stützen und ein brückenförmiges, über die Faser (1) hinüberführendes Element auszubilden.

## Revendications

1. Dispositif de module optique destiné à produire un module optique fini, ledit dispositif comprenant:
- un mécanisme électro-optique (9) devant être couplé de manière optique à une fibre optique (1),
- un support de fibre optique (5) présentant une surface de support sur laquelle la fibre (1) doit être fixée à sa place, ledit support étant installé près du mécanisme électro-optique (9) et
- une préforme (7) de métal d'apport de brasage allongée d'une forme prédéterminée placée au dessus de la fibre (1),
caractérisé en ce que
le support de fibre optique (5) est muni d'au moins une cavité (5a) en une position prédéterminée sur la surface du support de fibre afin de recevoir une extrémité respective de la préforme (7) de métal d'apport de brasage et supporter de ce fait la préforme au dessus de la fibre et afin de former un élément servant de pont passant au dessus de la fibre (1), qui peut ensuite être fondu de manière à envelopper la fibre (1) pour la fixer.

2. Dispositif de module optique selon la revendication 1,
caractérisé en ce que
la préforme (7) de métal d'apport de brasage a une forme de J, une des deux portions étant insérée dans la cavité (5a).

3. Dispositif de module optique selon la revendication 1,
caracterisé en ce que
- la préforme (7) de métal d'apport de brasage a la forme d'un crochet, une forme en U ou en L et en ce que
- plusieurs cavités (5a, 5a) sont disposées sur la surface du support de fibre, les portions des préformes de métal d'apport de brasage respectives étant insérées dans celles-ci.

4. Dispositif de module optique selon l'une des revendications précédentes,
caractérisé en ce que
la préforme (7) de métal d'apport de brasage ne contient pas de flux.

5. Dispositif de module optique selon l'une des revendications précédentes,
caractérisé en ce que
le mécanisme électro-optique (9) est monté sur un substrat calorifuge (6) avec le support de fibre (5).

6. Méthode pour fixer une fibre optique à une surface de support sur un support de fibre installé près d'un mécanisme électro-optique, comprenant les étapes consistant à:
(a) placer la fibre optique (1) sur la surface de support du support de fibre (5),
(b) placer une préforme (7) de métal d'apport de brasage allongée de forme prédéterminée par dessus la fibre optique (1) et
(c) faire fondre et solidifier la preforme (7) de métal d'apport de brasage de manière à envelopper la fibre,
caractérisée par les étapes consistant à
(d) revêtir la surface de support du support de fibre (5) avec du métal d'apport de brasage avant d'effectuer l'étape (a) et
(e) placer au moins une extrémité de la préforme (7) de métal d'apport de brasage dans une cavité respective (5a) en une position prédéterminée sur la surface du support de fibre lors de l'exécution de l'étape (b), maintenant et supportant de ce fait la préforme (7) par dessus la fibre (1) et formant un élément servant de pont passant au dessus de la fibre (1).
